# FASCICULE DE BREVET EUROPEEN

(11) **EP 2 314 887 B1**
(45) Date de publication et mention de la délivrance du brevet: **11.07.2012**
(21) Numéro de dépôt: 10354060.5
(22) Date de dépôt: 08.10.2010
(51) Int. Cl.: F16B 5/02, E04F 13/08, E06B 3/54

(54) **Dispositif pour la fixation, sur une structure porteuse, de la jonction à plat de plusieurs panneaux adjacents**
Vorrichtung zur Befestigung von mehreren benachbarten Paneelen in Flachverlegung auf einer Tragwerkstruktur
Device for attaching, to a bearing structure, the flat junction of a plurality of adjacent panels

(30) Priorité: 20.10.2009 FR 0905034
(43) Date de publication de la demande: 27.04.2011
(73) Titulaire: SB Ingénierie, 74330 Poisy (FR)
(72) Inventeur: Fievet, Frédéric, 74540 Gruffy (FR)
(74) Mandataire: Hecké, Gérard

(56) Documents cités:
- WO-A1-2007/108039
- CH-B1- 697 551
- DE-A1- 19 636 165
- JP-A- 8 004 167
- US-A- 1 720 142

## Description

### Domaine technique de l'invention

L'invention est relative à un dispositif pour la fixation, sur une structure porteuse, de la jonction à plat de plusieurs panneaux adjacents, comprenant :
- une attache de support munie d'un moyeu se prolongeant par au moins un bras radial muni à son extrémité distale de moyens pour assujettir un coin de panneau correspondant,
- une embase interposée entre la structure et le moyeu,
- des moyens pour fixer l'embase sur la structure,
- et des moyens pour bloquer le moyeu sur l'embase.

Un tel dispositif est connu du document CH 697 551 B1.

### État de la technique

Une fixation connue d'une jonction à plat de plusieurs panneaux adjacents met en oeuvre une embase, par exemple en forme de oméga, solidarisée à la structure par des moyens de fixation et sur laquelle le moyeu de l'attache est solidarisé par des moyens de blocage.

Les moyens de fixation sont conçus pour autoriser un réglage de la position de l'embase par rapport à la structure dans une première direction avant verrouillage, et les moyens de blocage sont configurés pour autoriser avant verrouillage un réglage en position de l'attache par rapport à l'embase dans une deuxième direction perpendiculaire à la première.

La mise en place du dispositif consiste à maintenir l'embase sur la structure jusqu'à verrouillage des moyens de fixation, puis à rapporter le moyeu de l'attache sur l'embase par simple appui. La tenue définitive de l'attache est obtenue à la suite d'une dernière opération consistant à verrouiller fermement les moyens de blocage constitués concrètement par de simples moyens appliquant un serrage du moyeu contre l'embase.

Compte tenu de l'efficacité médiocre des moyens de blocage, l'ajustement précis du positionnement de l'attache est réalisé préalablement à cette dernière opération de serrage. Cet ajustement consiste à réaliser une opération de perçage conjointement du moyeu et de l'embase, pour permettre l'insertion d'une vis ou d'une goupille réalisant un indexage angulaire.

Cette opération nécessite donc du temps, mobilise du matériel et du personnel, pour conduire à une précision et une qualité de maintien limitées. Elle engendre de surcroît un risque de détérioration des éléments percés, notamment en cas de traitement thermique ou surfacique, voire de pollution de la matière à cause du foret utilisé pour le perçage.

De plus, au cours de l'utilisation ultérieure du dispositif, les charges appliquées aux extrémités distales des bras radiaux de l'attache peuvent, sous certaines conditions de déséquilibre mécanique, transmettre des efforts de cisaillement très élevés sur les goupilles. Ces goupilles sont susceptibles de rompre sous charge bien avant la limite de rupture théorique de l'attache pour laquelle elle a été dimensionnée. En cas de rupture d'une goupille, le positionnement de l'attache ne repose plus que sur l'effort de serrage appliqué par les moyens de blocage du moyeu contre l'embase. En pratique, la rupture d'une goupille, résultant par exemple d'un couple mécanique excessif appliqué sur le moyeu par exemple en cas de rupture de l'un des panneaux, implique un déplacement de l'attache suffisant pour décaler les panneaux, nuisant à l'esthétique et à la résistance générale. En résumé, l'utilisation de telles goupilles implique que la capacité maximale de résistance pour laquelle l'attache a été conçue n'est jamais exploitée.

### Objet de l'invention

L'objet de l'invention consiste à réaliser un dispositif de fixation qui soit de structure simple, pratique à mettre en oeuvre et qui facilite et améliore la fixation des panneaux supportés, et améliore les performances générales.

Le dispositif selon l'invention est remarquable en ce que :
- les moyens pour bloquer le moyeu sur l'embase comprennent un organe mâle adapté pour s'emboîter axialement par coincement dans un organe femelle complémentaire, ledit organe mâle ayant un profil polygonal pour bloquer la rotation de l'organe mâle par rapport à l'organe femelle après emboîtement,
- l'organe femelle est ménagé dans le moyeu,
- et l'embase porte des premiers éléments crantés coopérant par engrènement avec des deuxièmes éléments crantés portés par la pièce de liaison pour supprimer tout coulissement de l'attache par rapport à l'embase après actionnement de moyens de serrage axial de la pièce de liaison entre l'embase et l'attache.

La possibilité d'emboîtement axial par coincement de l'organe mâle, conjugué à l'action antirationnelle de son profil, remplissent simultanément et simplement une première fonction d'ajustement précis du positionnement de l'attache par rapport à l'embase, et par la suite une deuxième fonction d'assurer la transmission des efforts mécaniques de l'attache à l'embase. Ces deux fonctions sont obtenues sans nécessiter de matériel, d'opérations et de temps supplémentaires.

### Description sommaire des dessins

D'autres avantages et caractéristiques ressortiront plus clairement de la description qui va suivre d'un mode particulier de réalisation de l'invention donné à titre d'exemple non limitatif et représenté aux dessins annexés, dans lesquels :

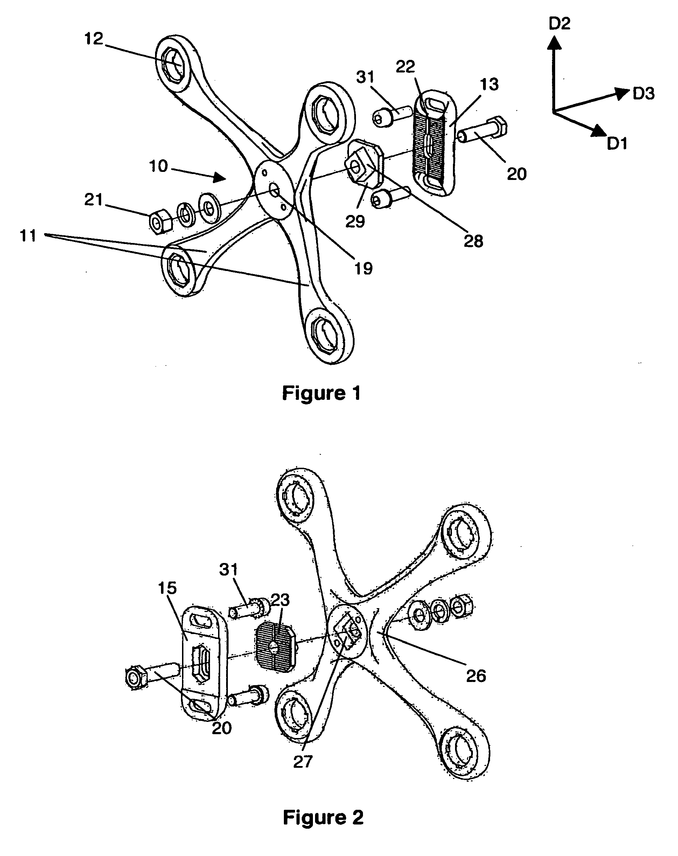

- les figures 1 et 2 sont des vues en perspective avant et arrière, de manière éclatée, d'un exemple de dispositif de fixation selon l'invention,
- la figure 3 est une vue en perspective de l'embase de liaison des figures 1 et 2,
- la figure 4 est une vue en perspective d'une partie déboîtée de l'attache de support des figures 1 et 2,
- la figure 5 illustre des courbes d'essais en charge du dispositif selon l'invention comparativement aux dispositifs de l'art antérieur.

### Description d'un mode préférentiel de l'invention

L'invention concerne le domaine de la fixation des panneaux de parement adjacents, notamment de verre, disposés à plat tangentiellement les uns aux autres et répartis selon des lignes et des rangées pour former un quadrillage matérialisant une paroi verticale, par exemple d'enveloppe extérieure d'un bâtiment ou de cloisonnement intérieur. Le dispositif assure plus particulièrement la fixation, sur une structure porteuse (non représentée), de la jonction à plat de plusieurs panneaux de parement adjacents.

La structure porteuse peut par exemple être constituée par des profilés de montage, par exemple solidarisés au mur porteur d'un bâtiment. De tels profilés pourraient également être formés par des montants individuels espacés les uns des autres pour former des cloisonnements intérieurs.

En référence aux figures, le dispositif selon l'invention comprend une attache de support 10 destinée à être fixée sur la structure porteuse. L'attache 10 a pour fonction de solidariser à leur jonction à plat les panneaux adjacents en maintenant de faibles intervalles entre eux. L'attache 10 est munie d'un moyeu 26 se prolongeant par au moins un bras radial 11 équipé à son extrémité distale d'un trou 12 débouchant à ses deux extrémités. Chacun de ces trous 12 est adapté au passage d'un élément de fixation tel qu'un système boulon-écrou, formant des moyens pour assujettir un coin de panneau. Le nombre de bras radiaux 11, ici de quatre, est variable en fonction du nombre de panneaux adjacents réunis à la jonction à fixer par le dispositif. L'angle entre deux bras adjacents peut être quelconque suivant les applications, et potentiellement non homogène d'un bras à l'autre pour une même attache.

Le dispositif comporte également une embase de liaison 13 par exemple en forme de plaque rectangulaire, ayant deux faces 14, 15 opposées dans une direction transversale D3 de l'embase 13, respectivement avant et arrière. Les faces 14, 15 sont destinées à venir respectivement en appui contre l'attache 10 au niveau du moyeu 26, et contre la structure porteuse. La direction D3 correspond à l'épaisseur de la plaque formant l'embase 13. L'embase 13 est donc destinée à être interposée entre la structure et le moyeu de l'attache.

D'autre part, le dispositif comprend des moyens de fixation pour verrouiller l'embase 13 sur la structure. Les moyens de fixation peuvent être configurés pour autoriser un réglage de la position de l'embase 13 par rapport à la structure dans une direction latérale D1 de l'embase 13, avant verrouillage. À titre d'exemple, les moyens de fixation peuvent comporter au moins une lumière allongée 16 dans la direction latérale D1 pratiquée dans l'embase 13, et au moins un système de serrage 31 par exemple de type vis-écrou traversant ladite lumière 16. Dans l'exemple illustré, deux lumières allongées 16 parallèles sont décalées dans une direction longitudinale D2 de l'embase 13, chacune ménagée au travers de l'embase, par exemple dans le fond d'un méplat 17, par exemple formé aux extrémités longitudinales de la plaque constitutive de l'embase 13.

Des moyens de blocage sont prévus pour verrouiller l'attache 10 sur l'embase 13. Ces moyens peuvent être configurés pour autoriser, avant leur verrouillage, un réglage de la position de l'attache 10 relativement à l'embase par rapport à la direction longitudinale D2 de l'embase 13. À titre d'exemple, les moyens de blocage comportent au moins une ouverture allongée 18 pratiquée dans l'embase 13 dans la direction longitudinale D2, et au moins un orifice de passage 19 débouchant sur deux faces opposées transversalement de l'attache 10, et au moins un système vis-écrou 20, 21 traversant ladite ouverture 18 et ledit orifice 19 pour former des moyens de serrage.

Les moyens pour bloquer le moyeu sur l'embase comprennent également un organe mâle adapté pour s'emboîter axialement par coincement dans un organe femelle complémentaire, ledit organe mâle ayant un profil polygonal pour bloquer la rotation de l'organe mâle par rapport à l'organe femelle après emboîtement. Le profil polygonal correspond par définition à un profil possédant plusieurs angles et plusieurs cotés (triangle, rectangle, carré, étoile, pentagone, hexagone, octogone...).

L'organe mâle peut être porté par le moyeu de l'attache ou par l'embase, ou bien encore de la manière illustrée, par une pièce de liaison 29 interposée entre l'embase et le moyeu. Dans ce dernier cas, l'organe femelle peut être ménagé dans le moyeu 26, sous la forme d'un logement 27, ou bien par l'embase. L'organe mâle peut être constitué par exemple au moyen d'un centreur 28 formée dans la pièce de liaison 29.

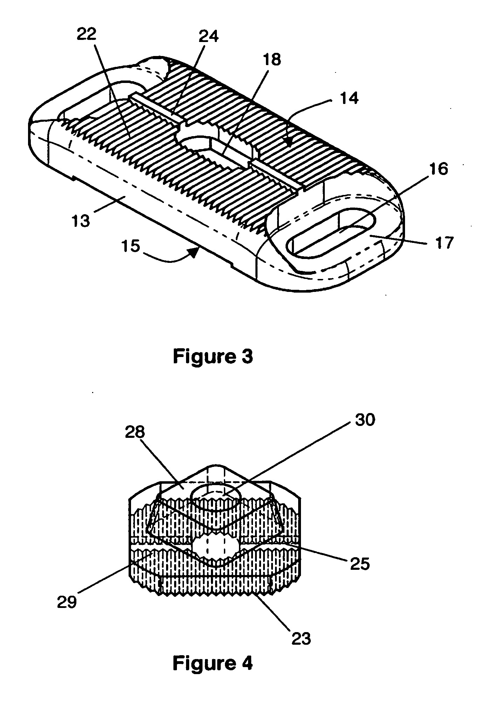

La pièce de liaison 29 est illustrée à la figure 4. Elle comporte une plaque principale ayant deux faces opposées parallèles décalées dans la direction transversale D3, avant et arrière. La face avant destinée à venir en contact du moyeu central 26 de l'attache 10 est pourvue du centreur 28 en saillie. La face arrière est quant à elle destinée à venir en appui contre la face avant de l'embase 13.

L'embase 13 porte également des éléments crantés 22, formés sur la face avant pour être tournés du côté de la pièce de liaison 29, afin de coopérer par engrènement, au moment de l'appui sur l'embase 13, avec des deuxièmes éléments crantés 23 complémentaires portés par la pièce de liaison 29 du côté de l'embase 13. Un tel engrènement des éléments crantés 22 et 23 a pour effet de supprimer tout coulissement longitudinal de l'attache 10 par rapport à l'embase 13 après verrouillage des moyens de serrage. Les moyens de serrage (système vis-écrou 20, 21) assurent un serrage axial de la pièce de liaison 29 entre l'embase et l'attache.

L'embase 13 porte sur sa face avant une nervure longitudinale 24 en saillie des éléments crantés 22, et venant se loger au moment de l'appui de la pièce de liaison contre l'embase dans une rainure longitudinale 25 complémentaire. Il en résulte la suppression de tout coulissement latéral de l'attache 10 par rapport à l'embase 13 après verrouillage des moyens de serrage 20, 21.

Les deuxièmes éléments crantés 23 et la rainure longitudinale 25 sont quant à eux formés dans sa face arrière de la pièce de liaison. L'orifice de passage 19 formé dans le moyeu de l'attache 10 se prolonge par un orifice de passage 30 agencé dans la pièce de liaison 29 de sorte à être dans le prolongement l'un de l'autre après emboîtement du centreur 28 dans le logement 27. Le passage 30 formé dans la pièce de liaison s'étend sur toute la hauteur du centreur 28, de manière à déboucher sur ses deux extrémités. L'ouverture 18 et les passages 19 et 30 peuvent être traversés par les moyens de serrage 20, 21.

Le centreur 28 présente un profil polygonal dans tout plan de coupe ayant un vecteur normal parallèle à la direction transversale D3. Cette particularité permet de bloquer la rotation de l'organe mâle par rapport à l'organe femelle après emboîtement. Cela permet en outre d'indexer angulairement l'attache 10 par rapport à la pièce de liaison 29 selon des positions angulaires prédéterminées. La transmission mécanique des efforts est directe de l'attache à la pièce de liaison par contact entre les organes mâle et femelle emboîtés, puis de la pièce de liaison à l'embase par les jeux d'éléments crantés et la nervure longitudinale.

Dans l'exemple illustré, l'attache 10 adopte une forme de croix à quatre bras radiaux 11 à angle droit l'un de l'autre et le centreur 28 présente un profil carré. La configuration angulaire du centreur 28 est tel que dans chaque position angulaire prédéterminée, les bras 11 forment chacun un angle de 45 degrés par rapport à la direction longitudinale D2 de l'embase 13 après l'appui de la pièce de liaison 29 contre l'embase 13.

Les moyens de serrage 20, 21 axial font partie intégrante des moyens pour bloquer le moyeu sur l'embase. Ces moyens de blocage comportent plus généralement :
- l'organe mâle, l'organe femelle, emboîtés axialement l'un dans l'autre dans la direction transversale,
- les moyens de serrage axial constitués par exemple par un système vis-écrou,
- l'ouverture allongée longitudinalement de l'embase et les orifices de passage ménagés conjointement dans la pièce de liaison et dans le moyeu, ces trois éléments permettant un passage des moyens de serrage dans la direction transversale.

Les éléments crantés de l'embase coopèrent par engrènement avec les deuxièmes éléments crantés portés par la pièce de liaison pour supprimer tout coulissement de l'attache par rapport à l'embase après actionnement des moyens de serrage axial de la pièce de liaison entre l'embase et l'attache.

Dans le mode de réalisation représenté, les premiers et les deuxièmes éléments crantés 22 et 23 sont configurés en forme de crémaillère, dont les stries sont dirigées dans la direction latérale D1. Toutefois, seuls les premiers ou les deuxièmes éléments crantés pourraient adopter une forme de crémaillère. Il en résulte qu'il est possible de bloquer sélectivement l'attache 10 par rapport à l'embase 13 dans la direction longitudinale D2 en une pluralité de positions prédéterminées. Après la sélection d'une position puis le verrouillage des moyens de serrage 20, 21, les éléments crantés formés par les stries de ladite au moins une crémaillère suppriment toute possibilité de coulissement longitudinal. Un ajustement de la position longitudinale relative entre l'attache et la structure est possible dans ce cas. La position latérale relative entre l'attache et la structure peut également être ajustable grâce aux moyens de fixation, indépendamment de l'ajustement longitudinal. Le dispositif présente en outre l'avantage de sa simplicité et de sa facilité de mise en oeuvre.

La nervure longitudinale assure en outre un blocage en rotation de l'attache et de la pièce de liaison par rapport à l'embase, facilite la mise en place angulaire de l'attache par rapport à l'embase, et évite tout décalage angulaire de l'attache au moment de l'actionnement des moyens de serrage.

Une orientation spatiale de la direction longitudinale D2 selon la direction verticale est particulièrement avantageux pour le report de charge de l'attache à l'embase.

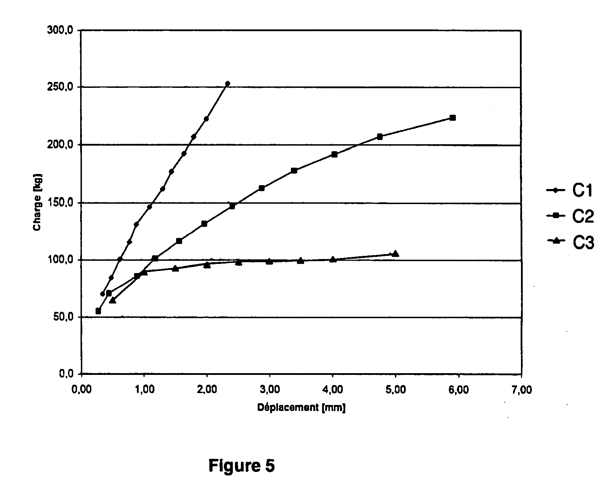

La figure 5 illustre trois courbes C1 à C3 représentatives de la charge à appliquer (en kg) sur un bras radial d'une attache en fonction du déplacement de ce bras (en mm), pour trois dispositifs différents. La courbe C1 correspond au dispositif selon l'invention, tandis que les courbes C2 et C3 correspondent à deux exemples de dispositifs de l'art antérieur utilisant, en complément des moyens de serrage du moyeu sur l'embase, respectivement une vis d'indexage angulaire et une goupille d'indexage angulaire. Il ressort de la figure 5 que la courbe C1 est continuellement et nettement au-dessus de la courbe C2, de même la courbe C2 par rapport à la courbe C3. Il en résulte que pour une charge donnée appliqué à un bras radial de l'attache d'un dispositif selon l'invention, le déplacement de ce bras au point d'application de la charge est nettement inférieur au déplacement du bras dans le cas où cette charge donnée serait appliquée à l'attache d'un dispositif de l'art antérieur. La résistance en rotation des moyens de blocage du moyeu sur l'embase est donc nettement améliorée par rapport à l'art antérieur, ce qui implique que la capacité maximale de résistance pour laquelle l'attache a été conçue peut être exploitée.

## Revendications

1. Dispositif pour la fixation, sur une structure porteuse, de la jonction à plat de plusieurs panneaux adjacents, comprenant :
- une attache de support (10) munie d'un moyeu (26) se prolongeant par au moins un bras radial (11) équipé à son extrémité distale de moyens (12) pour assujettir un coin de panneau correspondant,
- une embase (13) interposée entre la structure et le moyeu (26),
- des moyens pour fixer l'embase (13) sur la structure,
- et des moyens pour bloquer le moyeu (26) sur l'embase (13),
**caractérisé en ce que** :
- les moyens pour bloquer le moyeu sur l'embase comprennent un organe mâle (28) adapté pour s'emboîter axialement par coincement dans un organe femelle (27) complémentaire, ledit organe mâle (28) ayant un profil polygonal pour bloquer la rotation de l'organe mâle (28) par rapport à l'organe femelle (27) après emboîtement,
- l'organe femelle est ménagé dans le moyeu (26),
- et l'embase (13) porte des premiers éléments crantés (22) coopérant par engrènement avec des deuxièmes éléments crantés (23) portés par la pièce de liaison (29) pour supprimer tout coulissement de l'attache (10) par rapport à l'embase (13) après actionnement de moyens de serrage axial de la pièce de liaison (29) entre l'embase (13) et l'attache (10).

2. Dispositif selon la revendication 1, **caractérisé en ce que** l'organe mâle est porté par le moyeu (26) de l'attache (10).

3. Dispositif selon la revendication 1, **caractérisé en ce que** l'organe mâle est porté par l'embase (13).

4. Dispositif selon la revendication 1, **caractérisé en ce que** l'organe mâle (28) est porté par une pièce de liaison (29) interposée entre l'embase (13) et le moyeu (26).

5. Dispositif selon la revendication 1, **caractérisé en ce que** les premiers et/ou les deuxièmes éléments crantés (22, 23) sont configurés en forme de crémaillère, dont les stries sont dirigées dans une direction latérale.

6. Dispositif selon la revendication 1, **caractérisé en ce que** l'embase (13) porte une nervure (24) se logeant dans une rainure (25) complémentaire de la pièce de liaison (10) au moment de l'appui de la pièce de liaison (10) contre l'embase (13).

7. Dispositif selon la revendication 1, **caractérisé en ce que** les moyens pour bloquer le moyeu sur l'embase comportent au moins une ouverture allongée (18) dans une direction longitudinale pratiquée dans l'embase (13), des orifices de passage (19, 30) ménagés respectivement dans la pièce de liaison (29) et dans le moyeu (26), ladite ouverture (18) et lesdits orifices (19, 30) étant traversés par lesdits moyens de serrage.

8. Dispositif selon la revendication 1, **caractérisé en ce que** les moyens pour fixer l'embase (13) sur la structure comportent au moins une lumière allongée (16) latéralement ménagée dans l'embase (13).

9. Dispositif selon l'une des revendications 1 à 8, **caractérisé en ce que** l'attache (10) adopte une forme de croix à quatre bras radiaux (11), les bras (11) formant chacun un angle de 45 degrés par rapport à la direction longitudinale (D2).

## Claims

1. Device for fixing, on a supporting structure, the flat junction of a plurality of adjacent panels, including:
- a support fastener (10) provided with a hub (16) extended by at least one radial arm (11) equipped at its distal end with means (12) for fixing a corresponding panel corner,
- a base plate (13) interposed between the structure and the hub (26),
- means for fixing the base plate (13) to the structure,
- and means for blocking the hub (26) on the base plate (13),
**characterized in that**:
- the means for blocking the hub on the base plate include a male body (28) adapted to be axially fitted, by a pinching process, into a complementary female body (27), said male body (26) having a polygonal profile so as to block the rotation of the male body (28) relative to the female body (16) once said bodies are fitted together,
- the female body is provided in the hub (26),
- the base plate (13) supports first corrugation elements (22) meshingly cooperating with second corrugation elements (23) supported by the connecting part (29) in order to prevent the fastener (10) from sliding relative to the base plate (13) after actuating means for axially tightening the connecting part (29) between the base plate (13) and the fastener (10).

2. Device according to claim 1, **characterized in that** the male body is supported by the hub (26) of the fastener (10).

3. Device according to claim 1, **characterized in that** the male body is supported by the base plate (13).

4. Device according to claim 1, **characterized in that** the male body (28) is supported by a connecting part (29) interposed between the base plate (13) and the hub (26).

5. Device according to claim 1, **characterized in that** the first and/or the second corrugation elements (22, 23) are configured as a toothed rack whose corrugations are oriented in a lateral direction.

6. Device according to claim 1, **characterized in that** the base plate (13) supports a rib (24) locating into a groove (25) complementary to the connecting part (10) when the connecting part (10) is resting against the base plate (13).

7. Device according to claim 1, **characterized in that** the means for blocking the hub on the base plate comprise at least one opening (18) extending in a longitudinal direction and provided in the base plate (13), and through openings (19, 30) respectively provided in the connecting part (29) and in the hub (26), said tightening means going through said opening (18) and said through openings (19, 30).

8. Device according to claim 1, **characterized in that** the means for fixing the base plate (13) to the structure comprises at least one laterally elongated hole (16) provided in the base plate (13).

9. Device according to anyone of the claims 1 to 8, **characterized in that** the fastener (10) has the shape of a cross with four radial arms (11), each arm (11) forming an angle of 45° relative to the longitudinal direction (D2).

## Patentansprüche

1. Vorrichtung zur Befestigung einer liegenden Verbindung für mehrere angrenzende Platten an einer Tragkonstruktion, welche Vorrichtung umfasst:
- eine Tragbefestigung (10), die einen Kern (26) aufweist, der durch mindestens einen Radialarm (11) verlängert ist, der an seinem Distalende mit Mitteln (12) zur Befestigung einer entsprechenden Plattenecke versehen ist,
- einen Sockel (13), der zwischen der Konstruktion und dem Kern (26) angeordnet ist,
- Mittel zur Befestigung des Sockels (13) an der Konstruktion,
- und Mittel zum Blockieren des Kerns (26) am Sockel (13), **dadurch gekennzeichnet, dass**:
- die Mittel zum Blockieren des Kerns an der Konstruktion ein männliches Element (28) umfassen, das geeignet ist, sich axial durch Klemmung in ein komplementäres weibliches Element (27) einzufügen, welches männliche Element (28) ein polygonales Profil hat, um die Drehung des männlichen Elements (28) bezüglich dem weiblichen Element (27) nach dem Ineinanderfügen zu blockieren,
- das weibliche Element in dem Kern (26) angeordnet ist,
- und der Sockel (13) erste gerippte Elemente (22) trägt, die durch Eingreifen mit zweiten gerippten Elementen (23) zusammenwirken, die von dem Verbindungsstück (29) getragen werden, um jegliches Verrutschen der Befestigung (10) bezüglich dem Sockel (13) nach Betätigung der Mittel zum axialen Festziehen des Verbindungsstücks (29) zwischen dem Sockel (13) und der Befestigung (10) zu verhindern.

2. Vorrichtung nach Anspruch 1, **dadurch gekennzeichnet, dass** das männliche Element von dem Kern (26) der Befestigung (10) getragen wird.

3. Vorrichtung nach Anspruch 1, **dadurch gekennzeichnet, dass** das männliche Element von dem Sockel (13) getragen wird.

4. Vorrichtung nach Anspruch 1, **dadurch gekennzeichnet, dass** das männliche Element (28) von einem Verbindungsstück (29) getragen wird, das zwischen dem Sockel (13) und dem Kern (26) angeordnet ist.

5. Vorrichtung nach Anspruch 1, **dadurch gekennzeichnet, dass** die ersten und/oder die zweiten gerippten Elemente (22, 23) in Form eines Zahnrads ausgebildet sind, dessen Rillen in seitlicher Richtung ausgerichtet sind.

6. Vorrichtung nach Anspruch 1, **dadurch gekennzeichnet, dass** der Sockel (13) eine Rippe (24) aufweist, die in einer komplementären Rille (25) des Verbindungsstücks (10) aufgenommen wird, wenn das Verbindungsstück (10) an dem Sockel (13) anliegt.

7. Vorrichtung nach Anspruch 1, **dadurch gekennzeichnet, dass** die Mittel zum Blockieren des Kerns am Sockel mindestens eine in Längsrichtung verlaufende längliche Öffnung (18) in dem Sockel (13), Durchtrittsbohrungen (19, 30), die jeweils in dem Verbindungsstück (29) und im Kern (26) vorgesehen sind, umfassen, welche Öffnung (18) und welche Bohrungen (19, 30) von den genannten Mitteln zum Anziehen durchzogen werden.

8. Vorrichtung nach Anspruch 1, **dadurch gekennzeichnet, dass** die Mittel zum Befestigen des Sockels (13) an der Konstruktion mindestens ein längliches, seitlich in dem Sockel (13) vorgesehenes Fenster (16) umfassen.

9. Vorrichtung nach einem der Ansprüche 1 bis 8, **dadurch gekennzeichnet, dass** die Befestigung (10) in Form eines Kreuzes mit vier Radialarmen (11) vorgesehen ist, wobei die Arme (11) jeweils einen Winkel von 45 Grad zur Längsrichtung (D2) aufweisen.
